## Europäisches Patentamt
## European Patent Office
## Office européen des brevets

(19)

(11) Veröffentlichungsnummer : **0 068 139**
**B1**

(12)

# EUROPÄISCHE PATENTSCHRIFT

(45) Veröffentlichungstag der Patentschrift :
05.06.85

(51) Int. Cl.⁴ : **D 03 C   1/00, F 16 D 11/06**

(21) Anmeldenummer : 82104462.5

(22) Anmeldetag : 21.05.82

(54) **Kupplungsvorrichtung, insbesondere für eine Textilmaschine.**

(30) Priorität : 26.06.81 CH 4234/81

(43) Veröffentlichungstag der Anmeldung :
05.01.83 Patentblatt 83/01

(45) Bekanntmachung des Hinweises auf die Patenterteilung : 05.06.85 Patentblatt 85/23

(84) Benannte Vertragsstaaten :
AT BE CH DE FR GB IT LI NL SE

(56) Entgegenhaltungen :
EP-A- 0 036 830
DE-B- 2 938 451
DE-B- 3 001 310
FR-A- 2 398 229

(73) Patentinhaber : Textilma AG
Seestrasse 97
CH-6052 Hergiswil (CH)

(72) Erfinder : Speich, Francisco
Bleumattstrasse 440
CH-5264 Gipf-Oberfrick (CH)

(74) Vertreter : Schmauder, Klaus Dieter et al
c/o Schmauder & Wann Patentanwaltsbüro Nidelbadstrasse 75
CH-8038 Zürich (CH)

EP 0 068 139 B1

## Beschreibung

Die Erfindung betrifft eine Kupplungsvorrichtung gemäss dem Oberbegriff des Anspruches 1.

Kupplungsvorrichtungen der eingangs genannten Art sind bekannt, so beispielsweise aus der DE-AS 20 36 643. Dabei weist die Steuervorrichtung eine Musterkarte auf, die von Ablesenadeln abgetastet wird. Letztere sind an Trägern angeordnet, die mittels Federn von einem ortsfesten Block gegen die Musterkarte gedrückt werden. Sticht eine Ablesenadel in ein Loch der Musterkarte, so wird der entsprechende Träger vorbewegt, so dass eine Nase des Trägers in den Schwenkbereich eines Schwenkhebels gerät, der den Träger und damit die Ablesenadel weiter in die Musterkarte vorstösst. Der Träger nimmt über ein Zugelement mit einer Ausgleichsfeder den Schaltring entgegen der Kraft einer Vorspannfeder mit. Der Schaltring wird demnach entweder durch die Vorspannfeder oder durch den Träger, der über eine Ausgleichfeder mit dem Schaltring verbunden ist, hin- und herbewegt. Da der Schaltring in beide Schaltstellungen durch Federelemente bewegt wird, ergibt sich eine ungenaue Fixierung des Schaltringes, welche dem Kupplungskeil entgegenwirken kann, wodurch Fehlschaltungen möglich sind. Um dem entgegenzuwirken, weist der Schaltring gabelartige Arme auf, zwischen denen ein Schwenknocken angeordnet ist, der in einer Stellung den Schaltweg des Schaltringes begrenzt und in einer zweiten Stellung den Schaltring in einer Mittelstellung fixiert. Das Federsystem beinhaltet insbesondere die Möglichkeit von Resonanzschwingungen, so dass der Antriebsdrehzahl der Antriebswelle Grenzen gesetzt sind. Im übrigen ist diese Steuervorrichtung relativ kompliziert und dadurch störanfällig. Ausserdem besitzt es eine relativ grosse Masse, und ist insofern auch träge, wodurch die Antriebsleistung ebenfalls begrenzt ist. Schliesslich ist die Steuerung mit Musterkarten mit hinlänglich bekannten Nachteilen behaftet.

Aufgabe der Erfindung ist es, eine Kupplungsvorrichtung der eingangs genannten Art so auszubilden, dass sie die genannten Nachteile nicht aufweist, mit wenigen Teilen auskommt, eine exakte Steuerung und Halterung des Schaltringes in den Schaltstellungen ermöglicht, wodurch die Steuervorrichtung einfacher und weniger verschleissanfällig ist und überdies geringere Massenkräfte aufweist, die höhere Antriebsdrehzahlen zulassen.

Die gestellte Aufgabe wird durch die kennzeichnenden Merkmal des Anspruches 1 gelöst.

Dadurch, dass die Steuervorrichtung eine ortsfeste Antriebswelle mit einem Schwenkhebel aufweist, welcher beispielsweise pro Takt der Fachbildungsmaschine einer Textilmaschine einmal hin und her schwingt, und der mittels einer Antriebsfläche direkt auf den Schaltring einwirkt, ergibt sich bereits ein ausserordentlich einfacher Aufbau der Steuerung mit wenigen Antriebsteilen und eine direkte verzerrungsfreie Einwirkung des Schwenkhebels. Die Klinke, die mit einer Rast des Schaltringes zusammenwirkt, sorgt weiter dafür, dass zumindest eine Schaltstellung formschlüssig fixiert ist, so dass ein Ausweichen des Kupplungskeiles verhindert wird. Da überdies der Schaltring entgegen der Antreibsfläche des Schwenkhebels vorgespannt ist und auch gegen die Verrastung der Klinke mit dem Schaltring, wobei die Klinke den Schaltring in Abhängigkeit vom Schaltzustand des Steuerteiles festhält bzw. freigibt, wird auch eine ausserordentlich einfache Steuerung des Schaltringes erzielt.

Vorteilhafte Ausbildungen der Kupplungsvorrichtung sind in den Ansprüchen 2 bis 12 umschrieben.

Bei der Ausbildung der Kupplungsvorrichtung nach Anspruch 2 ist die Klinke ortsfest und die Bewegung des Schaltringes wird allein durch den Schwenkhebel bewirkt. In diesem Falle ist die zweite Schaltstellung durch die Verrastung der Klinke mit dem Schaltring eindeutig definiert. Bei einer Ausbildung der Kupplungsvorrichtung nach Anspruch 3 wird die Klinke synchron mit dem Schwenkhebel bewegt, jedoch sind die Antriebsrichtungen der Klinke und der Angriffsfläche des Schwenkhebels einander entgegengesetzt. In einer zwischen der ersten Schaltstellung und der zweiten Schaltstellung liegenden Mittelstellung kann die Rückholbewegung des Schaltringes, die unter dem Einfluss der Vorspannfeder gegen die Klinke erfolgt, durch die Rückholbewegung des Schwenkhebels abgelöst werden. Diese Mittelstellung kann als Entscheidungsstellung für den Schaltring verwendet werden derart, dass in Abhängigkeit vom Schaltzustand des Steuerteiles die Verrastung gelöst wird und der Schaltring der Rückholbewegung des Schwenkhebels folgt oder dass die Verrastung zwischen der Klinke und dem Schaltring beibehalten wird und bei der Rückholbewegung des Schwenkhebels die Klinke den Schaltring wieder in die zweite Schaltstellung bringt.

Die Klinke kann vom Steuerteil sowohl zum Einrasten wie auch zum Ausrasten bewegt werden. Vorteilhaft ist jedoch eine Ausbildung nach Anspruch 4, da dann die Klinke konstant gegen den Schaltring vorgespannt ist und der Steuerteil lediglich zum Ausrasten tätig werden muss.

Eine Ausbildung der Kupplungsvorrichtung nach Anspruch 5, ermöglicht eine sehr sorgfältige Feineinstellung des Steuerteiles.

Die Kupplungsvorrichtung kann nach Anspruch 6 ausgebildet sein, von Vorteil ist jedoch eine Ausgestaltung nach Anspruch 7. Insbesondere wenn die Klinke gegen den Schaltring vorgespannt ist, genügt es, wenn der elektromagnetische Steuerteil eine Antriebsbewegung nur in einer Richtung ausführt. Ausserdem erlaubt die elektromagnetische Ausbildung des Steuerteils die Verwendung von modernen Programmeinrichtungen, wie elektronischen Speicher und elektronischen Steuerungen, wie beispielsweise Magnetbandsteuerungen, so dass auf mechanische Steuereinrichtungen mit Musterkarten aus Papier oder Kunststoff verzichtet werden kann. Ausserdem lassen sich mit elektronischen Steuerungen die Schaltzeiten viel einfacher und genauer einstellen. Dies wirkt sich insbesondere bei sehr hohen Drehzahlen sehr vorteilhaft aus.

Der elektromagnetische Steuerteil kann weiter so ausgebildet werden, dass er die Klinke oder einen Zwischenhebel direkt aus der Raststellung anzieht. Von Vorteil ist jedoch eine Ausgestaltung nach Anspruch 8. Es können gegebenenfalls zusätzliche Mittel vorhanden sein, um den Zwischenhebel oder die Klinke gegen den Steuerteil zu bewegen. Besonders vorteilhaft ist jedoch eine Ausgestaltung der Kupplungsvorrichtung nach Anspruch 9, da dann die Abtastung des Steuerteils direkt durch die Bewegung des Schwenkhebels und damit des Schaltringes gesteuert wird, so dass die Anforderungen an die Synchronisation zwischen dem Steuerteil und dem Antrieb geringer sein können und sich allfällige Schwankungen im Antrieb nicht nachteilig auf die Steuerung auswirken.

Besonders vorteilhaft ist eine Ausbildung der Kupplungsvorrichtung nach Anspruch 10, da dadurch auch eine formschlüssige Lagefixierung des Schaltringes in der ersten Schaltstellung gegeben ist, so dass die Schaltsicherheit weiter erhöht wird.

Es ist möglich, die Kupplungsvorrichtung so auszubilden, dass der Schaltring eine zwangsweise Bewegung des Kupplungskeiles sowohl gegen die Antriebswelle wie gegen den Pleuel bewirkt. Von Vorteil ist jedoch eine Ausgestaltung der Kupplungsvorrichtung nach Anspruch 11, da dies die Ausbildung des Schaltringes und des Kupplungsteiles und des Schaltvorganges vereinfacht. Dabei ist es weiter von Vorteil, die Kupplungsvorrichtung nach Anspruch 12 ausgestaltet ist, so dass der Kupplungskeil während des Schaltvorganges von Klemmkräften entlastet ist.

Mit der neuen Kupplungsvorrichtung werden zusammenfassend eine ganze Reihen von entscheidenden Vorteilen erzielt.

Dadurch, dass der Schaltring in den beiden Schaltstellungen kraft- und formschlüssig gegen die Aussteuerkraft des Kupplungskeiles gehalten wird, ist die Steuerung unabhängig vom Widerstand, die der Kupplungsteil der Aussteuerbewegung entgegensetzt. Daraus ergibt sich eine grössere Arbeitssicherheit der Kupplungsvorrichtung, die insbesondere eine wesentliche Drehzahlsteigerung ermöglicht.

Die Kupplungsvorrichtung zeichnet sich weiter durch eine ausserordentlich kleine Anzahl von Hebeln und Drehpunkten aus, wodurch die Verschleissanfälligkeit wesentlich herabgesetzt wird, wobei gleichzeitig die Bedienungsfreundlichkeit und gegebenenfalls Reparaturfreundlichkeit verbessert wird. Ausserdem bedeutet die geringe Anzahl an Teilen geringe Massenkräfte, die ebenfalls eine höhere Leistung des Kupplungsvorrichtung ermöglichen. Ausserdem bewirkt die geringe Anzahl der Teile eine wirtschaftliche Herstellbarkeit der Kupplungsvorrichtung.

Insbesondere die elektromagnetische Ausbildung des Steuerteils liefert eine ausserordentlich einfache Steuerung wie bereits oben angegeben.

Ausführungsbeispiele des Gegenstandes der Erfindung werden nachfolgend anhand der Zeichnungen näher beschrieben, dabei zeigen :

Figur 1 eine Kupplungsvorrichtung mit Steuervorrichtung für einen Schaftantrieb, wobei sich der Schaltring in einer zweiten Stellung befindet, in Seitenansicht ;

Figur 2 die Kupplungsvorrichtung der Figur 1 im Schnitt II-II der Fig. 1 ;

Figur 3 den Schaltring der Kupplungsvorrichtung in Ansicht auf die Innenseite ;

Figur 4 die Anordnung des Kupplungskeiles und des Rückhaltekeiles an der Antriebswelle im Detail ;

Figur 5 eine weitere Ausbildung des Kupplungskeiles ;

Figuren 6 bis 12 die Kupplungsvorrichtung der Figur 1 mit weggelassenem Schaltring in verschiedenen Kupplungsphasen ;

Figur 13 das Verdrängen eines ungewollt verschobenen Rückhaltekeils in die Soll-Lage.

Figuren 14 und 15 die Steuervorrichtung der Figur 1 im Ausschnitt und in verschiedenen Steuerphasen ;

Figur 16 die Kupplungsvorrichtung der Figur 1, wobei sich der Schaltring in der ersten Schaltstellung befindet, in Seitenansicht ;

Figur 17 die Kupplungsvorrichtung der Figur 1, jedoch mit einer abgewandelten Steuervorrichtung, in Seitenansicht ;

Figuren 18 und 19 die abgewandelte Steuervorrichtung der Figur 17 im Ausschnitt und in verschiedenen Steuerphasen ; und

Figur 20 die Kupplungsvorrichtung der Figur 17, wobei sich der Schaltring in der ersten Schaltstellung befindet, in Seitenansicht.

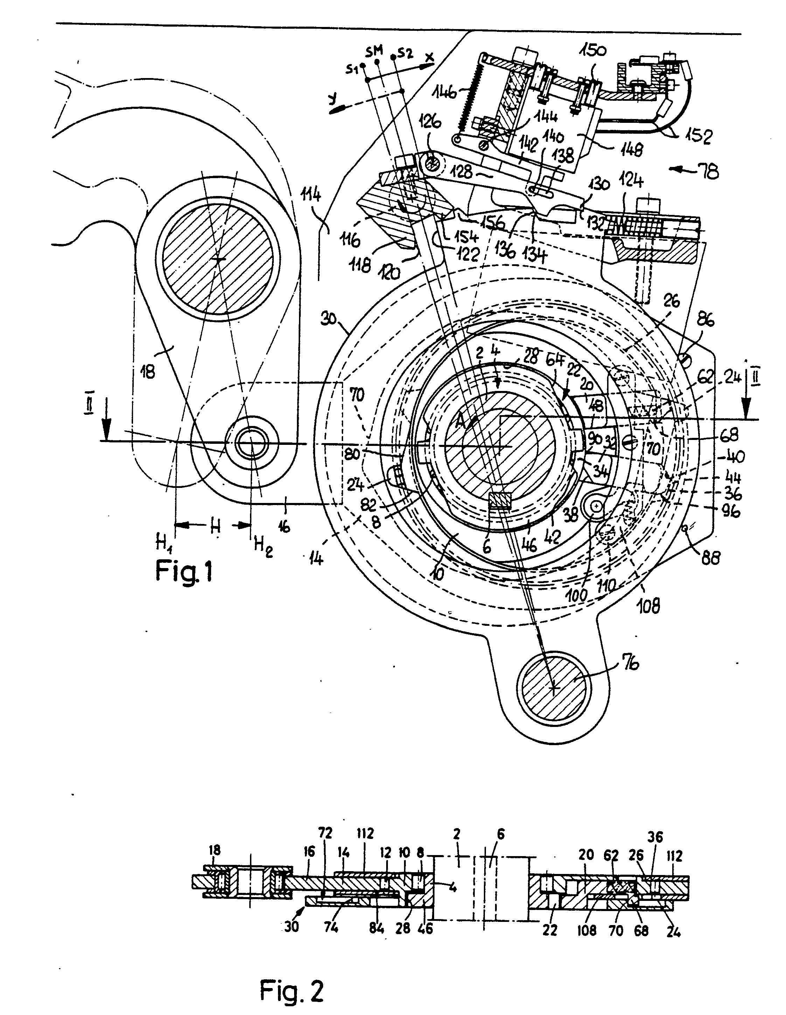

Die in den Figuren 1 bis 4 dargestellte Kupplungsvorrichtung weist eine Antriebswelle 2 auf, die sich intermittierend dreht und jeweils nach 180° Drehwinkel annähernd oder vollständig zum Stillstand kommt. Auf der Antriebswelle 2 ist ein Lagerring 4 befestigt und durch einen Keil 6 gegen Verdrehen gesichert. Auf dem Lagerring 4 ist über ein Rollenlager 8 ein Exzenterring 10 angeordnet, an dem seinerseits über ein weiteres Rollenlager 12 ein Pleuel 14 angeschlossen ist. Die Pleuelstange 16 ist an einem Schwinghebel 18 angelenkt, der zum Antrieb eines nicht näher dargestellten Schaftes dient, wobei die Pleuelstange 16 einen Hub H von der Stellung $H_1$ bis $H_2$ ausführt. Zur Kupplung des Exzenterringes 10 mit der Antriebswelle 2 bzw. zum Festlegen des Exzenterringes 10 am Pleuel 14 dient ein Kupplungskeil 20, der wechselweise in mindestens eine mit der Antriebswelle 2 verbundene Kupplungsausnehmung 22 oder in mindestens eine mit dem Pleuel 14 verbundene Kupplungsausnehmung 24 einrastbar ist. Zwischen den Kupplungsausnehmungen 22 bzw. 24 ist der Kupplungskeil 20 mittels Leitkurven 26 bzw. 28 geführt, die mit dem Pleuel 14 bzw. der Antriebswelle 2 verbunden sind und ein Ausrasten aus der jeweiligen Kupplungsausnehmung verhindern. Ein mustermässig betätigbarer Schaltring 30 dient zur Steuerung des Kupplungskeiles 20. Unabhängig vom Kupplungskeil 20 ist im Exzenterring 10 weiter ein Rückhaltekeil 32 mindestens annähernd radial verschiebbar gelagert, der entgegen der Antriebsrichtung A der Antriebswelle 2 wirksam ist. Der Rückhaltekeil ist selbstschaltend und rastet entsprechend der Stellung des Kupplungskeiles 20 in mindestens eine mit der Antriebswelle 2 zusammenwirkende Rückhalteausnehmung 34 bzw. in eine mit dem Pleuel 14 zusammenwirkende Rückhalteausnehmung 36 ein. Am Rückhaltekeil 32 und/oder an den Rückhalteausnehmungen 34 bzw. 36 sind Steuerflächen 38, 40 bzw. 42, 44 vorhanden, die ein Verdrängen des Rückhaltekeiles 32 aus einer Ausnehmung ermöglichen, wenn die Antriebswelle 2 den Exzenterring 10 bzw. der Exzenterring 10 den Pleuel 14 überholt und wenn das jeweils andere Ende des Rückhaltekeiles 32 einer Ausnehmung gegenübersteht. Zwischen den Rückhalteausnehmungen 34 bzw. 36 ist der Rückhaltekeil 32 ebenfalls an den Leitkurven 26 bzw. 28 gegen Ausrasten geführt.

Im vorliegenden Ausführungsbeispiel ist die Kupplungsvorrichtung so ausgebildet, dass sie an zwei um 180° versetzten Stellen ein Ankuppeln des Exzenterringes 10 an der Antriebswelle 2 ermöglicht. Dementsprechend sind auch die Kupplungsausnehmungen 22, 24 sowie die Rüchalteausnehmungen 34, 36 paarweise, jeweils um 180° versetzt angeordnet.

Die mit der Antriebswelle 2 zusammenwirkenden Kupplungsausnehmungen 22 und Rückhalteausnehmungen 34, sowie die Leitkurven 28 sind an einem Radialflansch 46 des Lagerringes 4 angeordnet. Dieser Radialflansch 46 dient dabei gleichzeitig als seitliche Begrenzung des Rollenlagers 8.

Der Kupplungskeil 20 ist in einer Nut 48 im Exzenterring 10 verschiebbar gelagert. Dabei ist die Anordnung so getroffen, dass der Kupplungskeil 20 parallel zu einem Radialstrahl 50 der Antriebswelle 2 verschiebbar ist. Der Kupplungskeil 20 weist eine annähernd parallel zur Verschieberichtung 52 ausgerichtete Kupplungsflanke 54 auf, die mit einer entsprechenden Kupplungsflanke 56 der Kupplungsausnehmung 22 zusammenwirkt. Weiter enthält der Kupplungskeil 20 eine rückwärtige Stützflanke 58, die mit einer entsprechenden Stützfläche 60 im Exzenterring 10 zusammenwirkt. Dabei ist der Kupplungskeil 20 soweit vom Radialstrahl 50 entfernt, dass die Kupplungsflanke 56 der Kupplungsausnehmung 22 der Stützfläche 60 am Exzenterring 10 mindestens annähernd senkrecht gegenübersteht und mindestens annähernd gleich gross ist. Dadurch wird eine optimale Kraftübertragung erzielt und eine Biegebeanspruchung des Kupplungskeiles 20 vermieden.

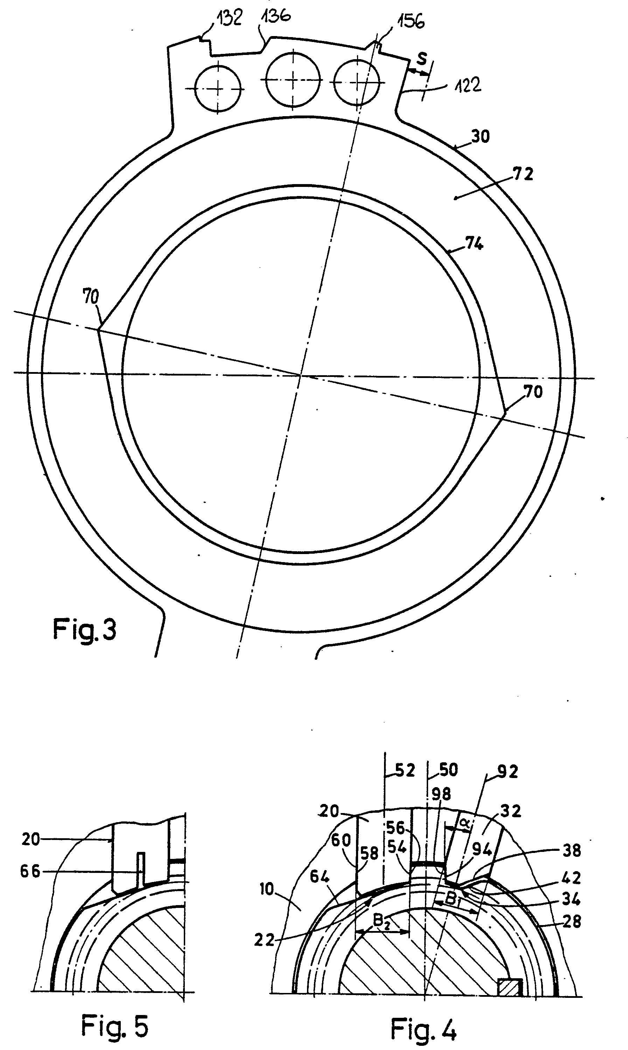

Zwischen dem Kupplungskeil 20 und dem Exzenterring 10 ist eine Vorspannfeder 62 angeordnet, die den Kupplungskeil 20 gegen die Antriebswelle 2 vorspannt und ein Einrasten des Kupplungskeiles 20 in die Kupplungsausnehmung 22 der Antriebswelle 2 ermöglicht, wenn der Schaltring 30 in einer Kuppelstellung steht. Die Kupplungsausnehmung 22, die der Antriebswelle 2 zugeordnet ist, weist einen annähernd tangentialen Einlaufteil 64 auf, der ein sanftes Einkuppeln des Kupplungskeiles 20 ermöglicht. Dieses sanfte Einkuppeln wird durch die dem Einkuppeln dienende Vorspannfeder 62 begünstigt. Gemäss der Ausbildung der Figur 5 kann der Kupplungskeil 20 mit einem Schlitz 66 versehen sein, der offen zur Kupplungsausnehmung 22 hin ausgeführt ist und dem Kupplungskeil eine federnde Eigenschaft verleiht, die das Einrasten des Kupplungskeiles 20 in der Kupplungsausnehmung 22 dämpft.

Der Kupplungskeil 20 ist mit einem seitlich vorstehenden Mitnehmernocken 68 ausgestattet, der mit entsprechenden Steuernocken 70 am Schaltring 30 zusammenwirkt, um ein Auskuppeln des Kupplungsgliedes 20 aus der Kupplungsausnehmung 22 der Antriebswelle 2 zu ermöglichen.

Der Schaltring 30 überdeckt hierzu die Bewegungsbahn des Mitnehmernockens 68. Der Schaltring 30 weist ferner eine Führungsnut 72 auf, in der der Mitnehmernocken kreist. Die Innenflanke 74 der Führungsnut 72 enthält die Steuernocken 70. Der Schaltring ist achsparallel, jedoch exzentrisch zur Antriebswelle 2 an einem Bolzen 76 verschwenkbar gelagert. Eine unten im einzelnen näher beschriebene Steuervorrichtung 78 dient zum Verschwenken des Schaltringes 30 um den Schaltweg S.

Der Kupplungskeil 20 greift mit seinem der Antriebswelle 2 abgewandten Ende in die Kupplungsausnehmung 24 ein, die dem Pleuel 14 zugeordnet ist. Diese Kupplungsausnehmung weist wiederum einen annähernd tangentialen Einlaufteil 80 auf und eine das Auskuppeln erleichternde geneigte Auslaufflanke 82. Die Leitkurve 26 geht in den Einlaufteil 80 über und schliesst an die Auslaufflanke 82 an. Die Leitkurve 26 sowie die Kupplungsausnehmung 24 sind in einem Ring 84 angeordnet, der seitlich am Pleuel 14 angeordnet ist und radial gegen die Antriebswelle 2 vorsteht. Der Ring 84 dient dabei gleichzeitig zur Stützung des Pleuels 14 und des Rollenlagers 12 am Exzenterring 10. Der Ring ist über Schrauben 86 und Stifte 88 mit dem Pleuel 14 verschraubt. Die Schrauben 86 und die Stifte 88 können als Sicherheits-Scherstellen ausgestaltet sein, die abscheren, wenn der Kupplungskeil 20 blockiert.

Der Rückhaltekeil 32 ist ebenfalls in einer Nut 90 im Exzenterring 10 verschiebbar gelagert, wobei die Verschieberichtung im vorliegenden Beispiel raidial zur Antriebswelle 2 liegt. Die vordere Angriffsflanke 94 des Rückhaltekeiles 32 die der Antriebswelle 2 zugewandt ist, sowie die hintere Angriffsflanke 96, die dem Pleuel 14 zugewandt ist, sind unter einem spitzen Winkel $\alpha$ zur Verschieberichtung 92 des Rückhaltekeiles 32 geneigt. Dadurch übt der Rückhaltekeil 32 eine Keilwirkung aus, so dass jegliches Spiel beim Kuppeln des Kupplungskeiles 20 ausgeschaltet wird. Die vordere Angriffsflanke 94 des der Antriebswelle 2 zugewandten Teiles des Rückhaltekeiles 32 sowie die Flanke 98 der Rückhalteausnehmung 34 sind mindestens annähernd parallel zum mittleren Radialstrahl 50 zwischen der Rückhalteausnehmung 34 und der Kupplungsausnehmung 22, wodurch eine optimale Kraftverteilung möglich ist. Die Breite $B_1$ der Rückhalteausnehmung 34 ist kleiner als die Breite $B_2$ des Kupplungskeiles 20, wodurch verhindert wird, dass der Kupplungskeil 20 in die Rückhalteausnehmung 34 einrasten kann.

Im Exzenterring 10 ist eine Klinke 100 verschwenkbar gelagert, die mit einer feder 102 gegen den Rückhaltekeil 32 vorgespannt ist. Wenn der Rückhaltekeil 32 aus der Rückhalteausnehmung 34 ausgerastet ist, dann wirkt eine Nase 104 der Klinke 100 mindestens angenähert senkrecht auf den Rückhaltekeil 32. Die dadurch erzeugte Reibungskraft verhindert ein ungewolltes Verschieben des Rückhaltekeiles 32 in Richtung der Rückhalteausnehmung 34 der Antriebswelle 2. Ist. der Rückhaltekeil 32 hingegen.in der Rückhalteausnehmung 34 eingerastet, so wirkt die Nase 104 in eine Ausnehmung 106 des Rückhaltekeiles 32 ein und spannt den Rückhaltekeil 32 in die Rückhalteausnehmung 34 vor. Dadurch wird einem ungewollten Ausrasten des Rückhaltekeiles 32 aus der Rückhalteausnehmung 34 vorgebeugt. Die Klinke 100 ist zusammen mit dem Rückhaltekeil 32 und dem Kupplungskeil 20 mittels eines Haltebleches 108 im Exzenterring 10 gehalten. Das Halteblech ist mittels Schrauben 110 mit dem Exzenterring 10 verschraubt.

Die Rückhalteausnehmung 36, die mit dem Pleuel 14 zusammenwirkt, ist ebenfalls in einem Ring 112 angeordnet, der auf der Rückseite des Pleuels 14 vorgesehen ist und entsprechend dem Ring 84 ausgebildet ist, der die Kupplungsausnehmung 24 des Kupplungskeiles 20 enthält. Der Ring 112 enthält auch die der Führung des Rückhaltekeiles 32 dienende Leitkurve 26. Der Ring 112 dient ebenfalls zur Halterung des Pleuel 14 sowie des Rollenlagers 12 am Exzenterring 10.

Im Gegensatz zur dargestellten Ausführungsform ist es auch möglich, die Ringe 84 und 112 nicht mit dem Pleuel 14 zu verbinden, sondern konzentrisch zur Antriebswelle 2 auszubilden und an einem nicht dargestellten Gehäuse feststehend anzuordnen. Es ist ferner denkbar, die Rückhalteausnehmung 36 direkt mit dem Ring 84 der die Ausnehmung 24 enthält zu kombinieren.

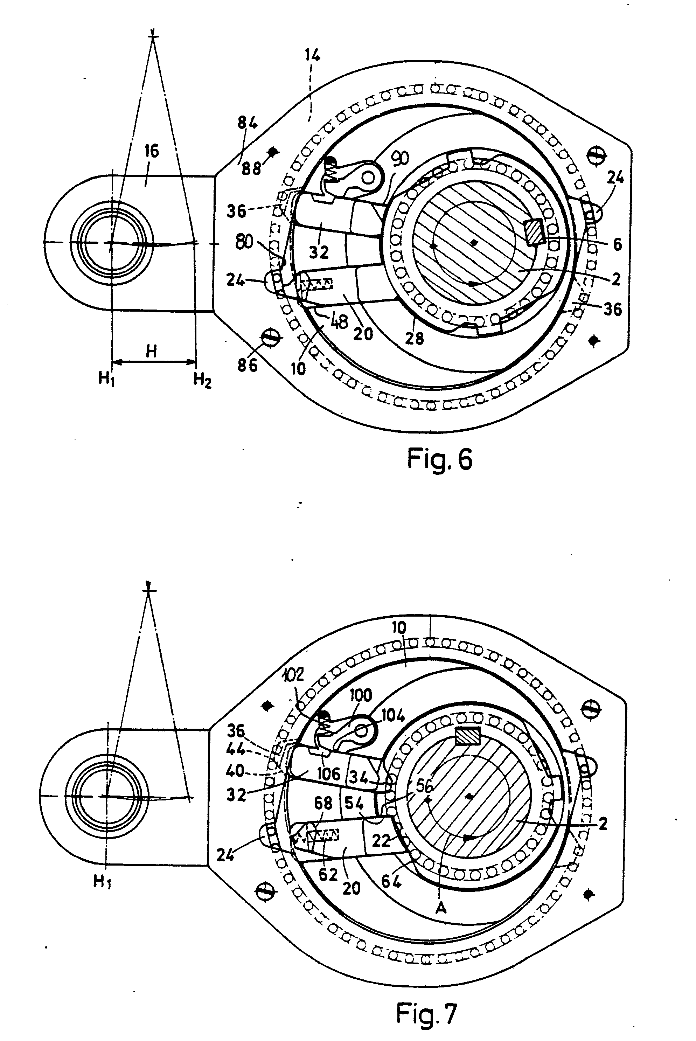

Die Funktionsweise der Kupplungsvorrichtung ist anhand der Figuren 6 bis 13 näher umschrieben.

Die Figur 6 zeigt die Kupplungsvorrichtung in der Phase, in der die Antriebswelle 2 frei drehbar ist und der Kupplungskeil 20 in die Kupplungsausnehmung 24 und der Rückhaltekeil 32 in die Rückhalteausnehmung 36 einrasten, welche jeweils dem Pleuel 14 zugeordnet sind. Dadurch wird der Exzenterring 10 am Pleuel 14 festgehalten und gegen Verdrehen gesichert. Der Schaltring 30 braucht hier keine Funktion auszuüben, da der Kupplungskeil 20 mit seiner inneren Stirnseite an der Antriebswelle 2 anliegt und somit gegen Ausrasten aus der Rückhalteausnehmung 24 am Pleuel gesichert ist.

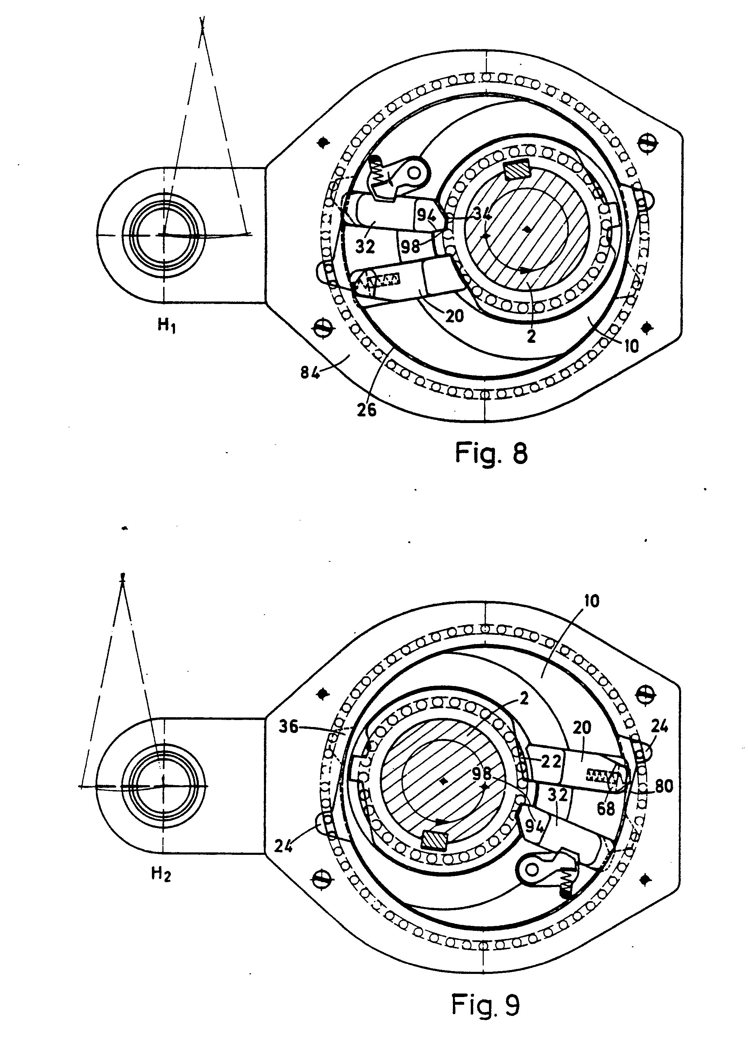

Die Figuren 7 und 8 zeigen das Einkuppeln der Kupplungsvorrichtung, das dann möglich ist, wenn der Schaltring 30 die Schaltstellung $S_2$ einnimmt, so dass der Steuernocken 70 den Mitnehmernocken 68 des Kupplungskeiles 20 für die Kuppelstellung freigibt. Dementsprechend ist der Kupplungskeil 20 unter dem Einfluss der Vorspannfeder 62 bereits über den tangentiallen Einlaufteil 64 in die Kupplungsausnehmung 22 eingelaufen und steht an der Kupplungsflanke 56 an. Der Rückhaltekeil 32, der mittels der Klinke 100 noch in der Rückhalteausnehmung 36 gehalten wird, steht nun der Rückhalteausnehmung 34 gegenüber, die der Antriebswelle 2 zugeordnet ist. Dreht die Antriebswelle 2 in Antriebsrichtung A weiter, so wird der Exzenterring 10 über den in der Kupplungsausnehmung 22 eingerasteten Kupplungskeil 20 mitgenommen. Dies bedingt, dass der ebenfalls mitgenommene Rückhaltekeil 32 mit seiner oberen Steuerfläche 40 an der Steuerfläche 44 der Rückhalteausnehmung 36 ansteht und aus dieser verdrängt wird. Der Rückhaltekeil 32 wird demnach gegen die Antriebswelle 2 in die entsprechende Rückhalteausnehmung 34 eingeschoben. Dabei greift die Klinke 100 mit ihrer Nase 104 in die Ausnehmung 106 und spannt den Rückhaltekeil 32 gegen die Rückhalteausnehmung 34 vor. Die vordere Angriffsflanke 94 des Rückhaltekeiles 32 wirkt mit der Flanke 98 der Rückhalteausnehmung 34 zusammen und verhindert ein Spiel zwischen der Antriebswelle 2 und dem Exzenterring 10. Während der Bewegung des mit der Antriebswelle 2 gekuppelten Exzenterringes 10 aus der in Figur 8 gezeigten Stellung in die in Figur 9 dargestellte Hublage $H_2$ steht die äussere Stirnseite des Kupplungskeiles 20 an der Leitkurve 26 des Ringes 84 an und die äussere Stirnseite des Rückhaltekeiles 32 an der Leitkurve 26 des Ringes 112, wodurch ein Auskuppeln des Kupplungskeiles 20 und des Rückhaltekeiles 32 verhindert wird.

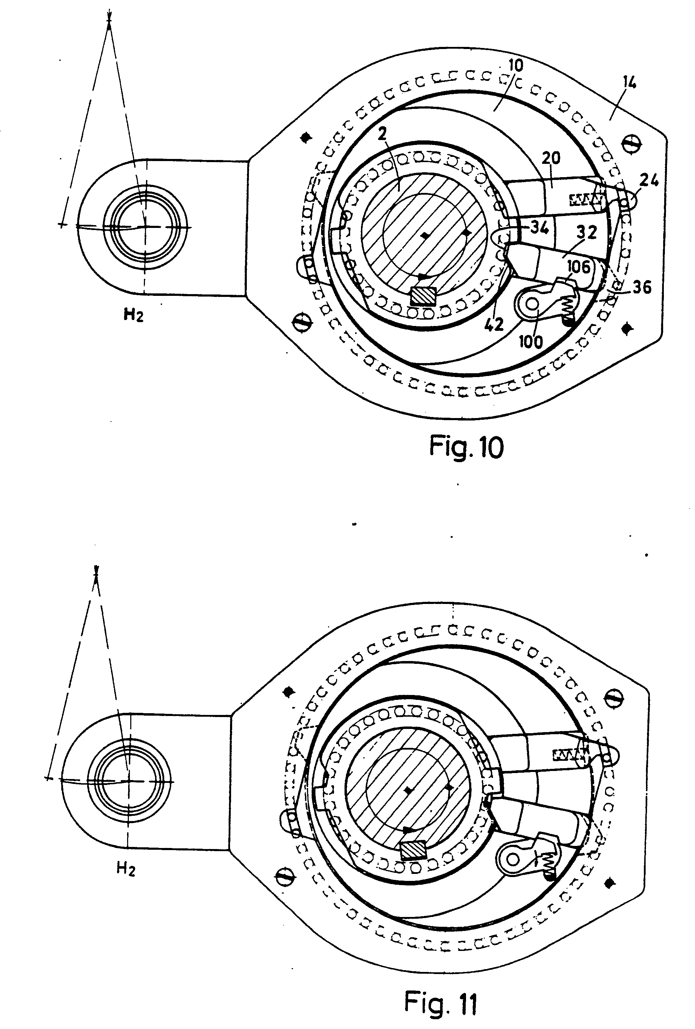

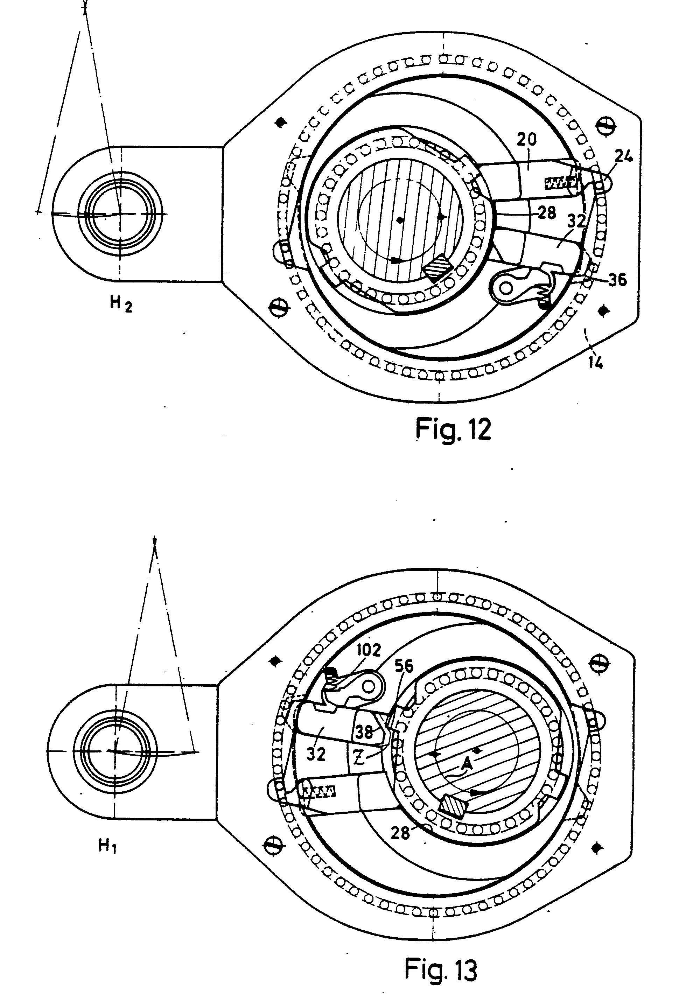

Steht der Schaltring 30 in der in Figur 1 gezeigten rechten bzw. zweiten Schaltstellung $S_2$, so wird die Kupplung entsprechend den Figuren 9 bis 12 gelöst. Dabei wirkt der Steuernocken 70 des Schaltringes 30 mit dem Mitnehmernocken 68 des Kupplungskeiles 20 zusammen und zieht diesen aus der Kupplungsausnehmung 22, die mit der Antriebswelle 2 in Verbindung steht. Entsprechend dem tangentialen Einlaufteil 80 der Kupplungsausnehmung 24 erfolgt das Auskuppeln allmählich, wie aus den Figuren 9 und 10 hervorgeht. Da die Antriebswelle während dieses Auskuppelvorganges gebremst wird, hat der Exzenterring 10 die Tendenz, unter dem Einfluss der Massenkräfte die Antriebswelle 2 zu überholen. Dies wird verhindet durch den Rückhaltekeil 32, der mit seiner vorderen Angriffsflanke 94 an der Flanke 98 der Rückhalteausnehmung 34 ansteht. Dadurch ist es möglich, den Kupplungskeil 20 klemmfrei aus der Kupplungsausnehmung 22 zu lösen. Sobalt der Kupplungskeil 20 vollständig gelöst ist, wie dies in Figur 10 dargestellt ist, greift der Kupplungskeil 20 in die Kupplungsausnehmung 24 ein, die mit dem Pleuel 14 in Verbindung steht, wodurch ein Weiterdrehen des Exzenterringes 10 verhindert wird. Dies bewirkt allerdings, dass die erneut anlaufende Antriebswelle 2 den Rückhaltekeil 32 mittels ihrer Steuerfläche 42 aus der Rückhalteausnehmung 34 verdrängt und den Rückhaltekeil 32 in der Rückhalteausnehmung 36, die mit dem Pleuel 14 in Verbindung steht, zum Einsatz bringt. Dabei wird auch gleichzeitig die Klinde 100 aus der Ausnehmung 106 des Rückhaltekeiles 32 verdrängt, wodurch die Vorspannung des Rückhaltekeiles gegen die Antriebswelle 2 aufgehoben wird und die Vorspannung senkrecht auf den Rückhaltekeil 32 wirkt, wie dies in Figur 11 und 12 dargestellt ist.

Die Antriebswelle 2 kann nun frei weiter drehen, wobei der Kupplungskeil 20 und der Rückhaltekeil 32 mittels der Leitkurven 28 an einem Auskuppeln aus der Kupplungsausnehmung 24 und der Rückhalteausnehmung 36, die mit dem Pleuel 14 zusammenwirken, gehindert werden. Damit kann ein neues Kupplungsspeil beginnen, wie in den Figuren 6 bis 12 gezeigt ist, jedoch mit um 180° verdrehtem Exzenterring.

Folgende Schaltzustände sind möglich :

A1) Wird der Schaltring 30 in die erste Schaltstellung $S_1$ gesteuert, dann geht der Pleuel 14 in die Stellung $H_1$ bzw. er bleibt in dieser Stellung $H_1$ ;

A2) Wird der Schaltring 30 in die zweite Schaltstellung $S_2$ gesteuert, dann geht der Pleuel 14 in die Stellung $H_2$ bzw. er bleibt in dieser Stellung $H_2$.

Figur 13 zeigt eine fast unwarscheinliche Situation, in der der Rückhaltekeil 32 ungewollt, z. B. durch Bruch der Druckfeder 102, in die gestrichelte Lage Z verschoben werden könnte. In diesem Falle würde die Kupplungsflanke 56 mit der Steuerfläche 38 des Rückhaltekeiles 32, so zusammenwirken, dass der Rückhaltekeil 32 wieder in seine zugeordnete Lage verdrängt würde, ohne dabei Schaden zu nehmen.

Wie bereits oben angedeutet ist eine Steuervorrichtung 78 vorhanden, um den Schaltring 30 beispielsweise über eine ansich bekannte Mustervorrichtung mustermässig zu steuern. Die Steuervorrichtung kann mechanisch betätigt werden oder als fluidbetätigtes Kolben/Zylinder-Aggregat ausgestaltet sein, das durch die Mustervorrichtung entsprechend betätigt wird. Besonders vorteilhaft ist eine Steuervorrichtung, die elektromagnetisch ausgebildet ist, wobei die Steuerimpulse elektrisch von einem Speicher, einem Magnetband oder einem sonstigen Impulsgeber erzeugt werden können.

In den Figuren 1 sowie 14 bis 16 ist eine bevorzugte Steuervorrichtung dargestellt. Diese weist eine am Maschinengestell 114 drehbar gelagerte ortsfeste Antriebswelle 116 auf, an der ein Schwenkhebel 118 befestigt ist welcher pro Takt der Fachbildungsmaschine einmal hin und her schwingt. Dieser enthält eine Antreibsfläche 120, die mit einem Absatz 122 des Schaltringes 30 zusammenwirkt und den Schaltring entgegen der Vorspannkraft einer Feder 124 aus der ersten Schaltstellung $S_1$ in Richtung X zur zweiten Schaltstellung $S_2$ bewegt. Am Schwenkhebel 118 ist mittels eines Bolzens 126 eine Klinke 128 angelenkt und zwar annähernd diametral zur Antriebsfläche 120. Diese Klinke weist gegen den Schaltring 30 und wirkt mit einer Nase 130 mit einer Raste 132 des Schaltringes 30 in einer nachfolgend noch näher zu beschreibenden Weise zusammen. Die Klinke 128 enthält eine Auflauffläche 134, die mit einer Auflauffläche 136 des Schaltringes zusammenwirkt, wenn die Klinke und der Schaltring relativ zueinander bewegt werden. An der Klinke 128 ist ferner ein Langloch 138 angeordnet, in das ein Bolzen 140 eingreift, der mit einem Zwischenhebel 142 in Verbindung steht, der an einem ortsfesten Bolzen 144 schwenkbar gelagert ist und mittels einer Feder 146 gegen die Klinke 128 vorgespannt ist.

Der Zwischenhebel 142 wirkt mit einem elektromagnetisch ausgebildeten Steuerteil 148 zusammen, der mittels Stellschrauben 150 relativ zum Zwischenhebel 142 einstellbar ist. Steuerimpulse werden von einer nicht näher dargestellten Mustervorrichtung, beispielsweise einem elektronischen Speicher, einer Magnetbandsteuerung oder dergleichen über Zuleitungen 152 dem Steuerteil 148 zugeführt. Die Haltekraft des elektromagnetischen Steuerteils 148 ist grösser als die durch die Freder 146 erzeugte Vorspannung an der Klinke 128, wenn der Zwischenhebel 142 am Steuerteil 148 anliegt. Die durch die Feder 146 erzeugte Vorspannung kann jedoch grösser oder kleiner sein als die Anzugskraft des elektromagnetischen Steuerteils 148, wenn die Klinke 128 am Schaltring 30 anliegt, d. h. der Zwischenhebel 142 vom Steuerteil 148 entfernt ist.

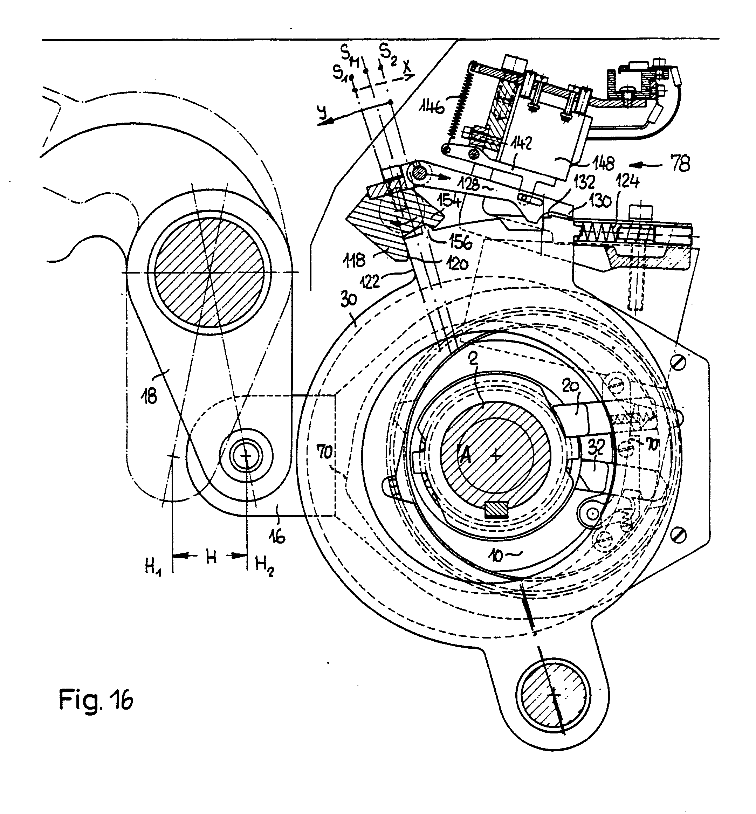

Der Schwenkhebel 118 ist schliesslich noch mit einem Sperrnocken 154 verbunden, der mit einem Ansatz 156 des Schaltringes 30 zusammenwirkt, wenn der Schwenkhebel 118 und der Schaltring 30 die erste Schaltstellung $S_1$ einnehmen, wie dies in Figur 16 gezeigt ist.

Die Funktionsweise der Steuervorrichtung ist wie folgt :

Die Figur 16 zeigt die Phase in der der Schwenkhebel 118 und der Schaltring 30 die erste, linke Schaltstellung $S_1$ einnehmen. Im dargestellten Beispiel ist der Steuerteil 148 aktiviert und hält den Zwischenhebel 142 entgegen der Vorspannung der Feder 146 fest, wodurch die Klinke 128 angehoben ist, und die Nase 130 nicht mit der Raste 132 des Schaltringes 30 zusammenwirken kann. In dieser Stellung liegt auch der Sperrnocken 154 des Schwenkhebels 118 am Ansatz 156 des Schaltringes an und verhindert ein Ausweichen des Schaltringes von der Antriebsfläche 120 entgegen der Vorspannung der Feder 124. Der Schaltring 30 ist damit formschlüssig gegen eine allfällige Schaltlast des Kupplungskeiles 20 gesichert. In dieser Schaltstellung gibt der Steuernocken 70 des Schaltringes 30 den Kupplungskeil 20 über den Mitnehmernocken 68 frei, so dass der Kupplungskeil 20 einschaltet, wie in Figur 16 dargestellt. Der Exzenterring 10 wird über den Kupplungskeil 20 und Rückhaltekeil 32 sowie Antriebswelle 2 mitgenommen und durch den Schaltring 30 in der Stellung $H_1$ wieder neu gesteuert bzw. beeinflusst. Würde sich der Exzenterring 10 mit dem Kupplungskeil 20 bereits in der Stellung $H_1$, befinden, wie dies in Figur 6 dargestellt ist, so würde der Steuernocken 70 des Schaltringes 30 den Kupplungskeil 20 nicht freigeben, und womit der Kupplungskeil in der ausgeschalteten Stellung verharrt. Die Antriebswelle 2 dreht ungekuppelt weiter, wie dies ebenfalls aus Figur 6 hervorgeht.

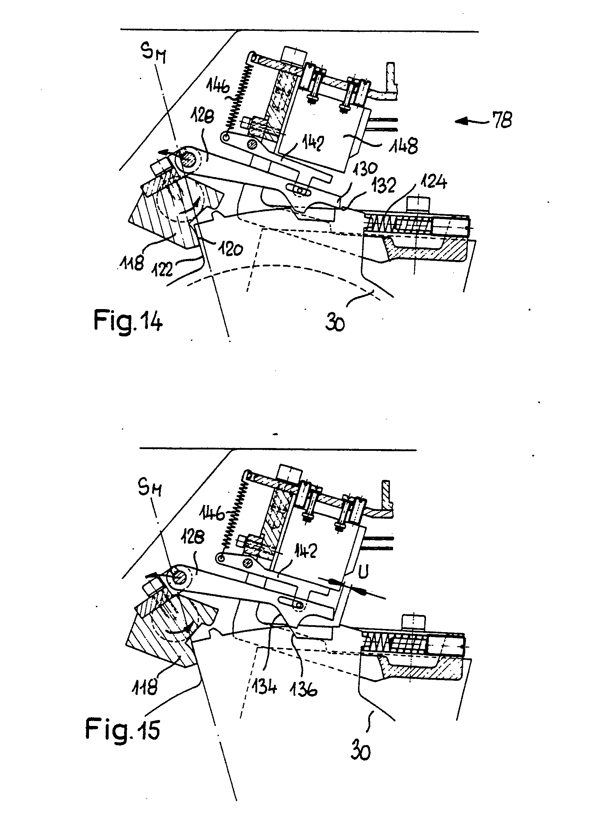

Schwingt nun der Schwenkhebel 118 nach rechts, so wird der Schaltring 30 über die Antriebsfläche 120 entgegen der Kraft der Feder 124 in Richtung X bis zur Mittelstellung SM bewegt, wie dies aus der Figur 14 hervorgeht. Ist der Steuerteil 148 nicht aktiviert so liegt die Klinke 128 unter dem Einfluss der Vorspannung der Feder 146 am Schaltring 30 an und kann mit seiner Nase 130 in die Raste 132 eingreifen. Schwenkt der Schwenkhebel 118 weiter, so wird die Klinke 128 entgegen der Bewegungsrichtung des Schaltringes 30 um das Mass U zurückgenommen, wodurch die Auflauffläche 134 der Klinke 128 an der Auflauffläche 136 des Schaltringes 30 aufläuft und die Klinke 128 und damit den Zwischenhebel 142 am Steuerteil 148 zur Anlage bringt, wie dies aus der Figur 15 hervorgeht. Ist der Steuerteil 148 aktiviert, so bleibt der Zwischenhebel 142 am Steuerteil hängen und der Schaltring 30 kehrt beim Zurückschwenken des Hebels 118 in Richtung Y in die erste Schaltstellung $S_1$ zurück, wie dies aus der Figur 16 hervorgeht.

Ist hingegen in der Mittelstellung $S_M$ der Steuerteil 148 nicht aktiviert, so gelangt die Klinke 128 unter dem Einfluss der Feder 146 bei Zurückschwenken des Schwenkhebels 118 wieder mit dem Schaltring 30 in Eingriff, so das die Nase 130 der Klinke 128 in die Raste 132 des Schaltringes 30 eingreifen kann. Beim Zurückschwenken des Schwenkhebels 118 in die erste Schaltstellung $S_1$ führt die Klinke 128 eine entgegengetzte Bewegung aus und dringt durch die Verrastung mit dem Schaltring (30) diesem entgegen der Vorspannung der Feder 124 in die zweite Schaltstellung $S_2$, die in Figur 1 dargestellt ist. Damit gelangt der Pleuel aus der Stellung $H_1$ in die Stellung $H_2$ oder verharrt in der Stellung $H_2$, wenn er vor dem Schaltvorgang bereits in dieser Stellung gewesen ist, wie dies aus Figur 1 hervorgeht. Die Verrastung zwischen der Klinke 128 über die Nase 130 mit der Raste 132 des Schaltringes 30 bewirkt eine formschlüssige Verbindung, die einer allfälligen Schaltkraft des Kupplungskeiles 20 entgegenwirkt, so dass Fehlschaltungen vermieden werden.

Beim Ausführungsbeispiel der Steuervorrichtung der Figuren 1 sowie 14 bis 16 besteht der Vorteil, dass die Steuerentscheidung in einer mittleren Schaltstellung $S_M$ stattfindet, so dass der Schwenkweg des Schwenkhebels 118 relativ klein gehalten werden kann, was sich günstig auf eine hohe Antriebsdrehzahl auswirkt.

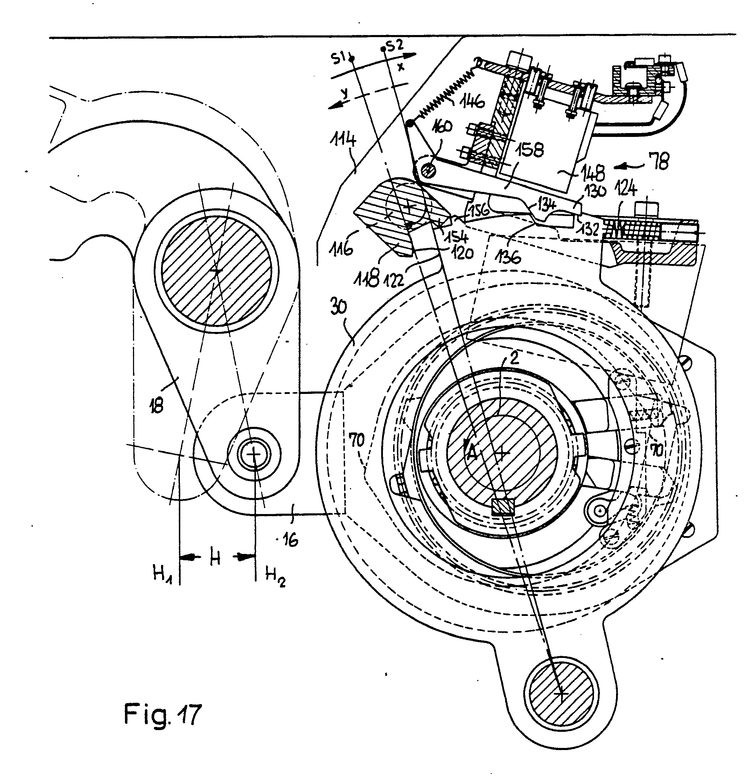

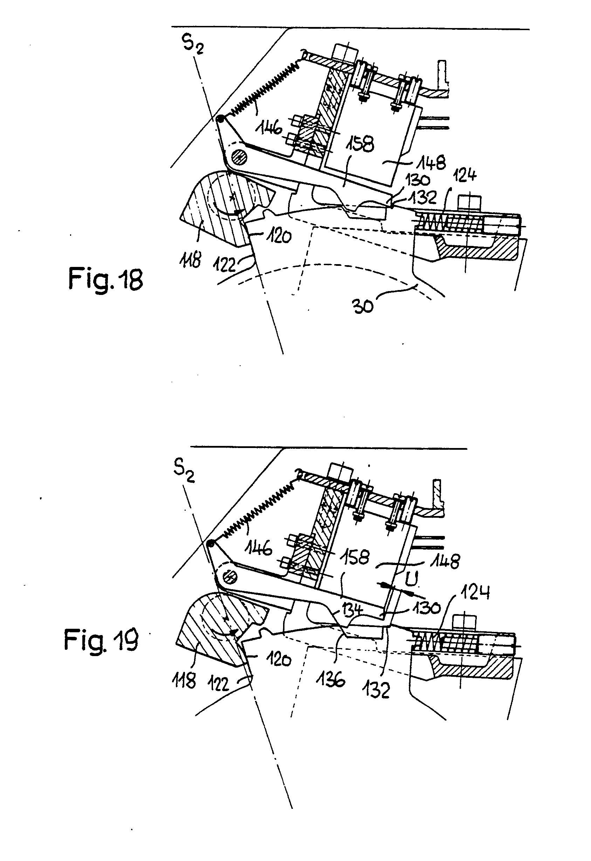

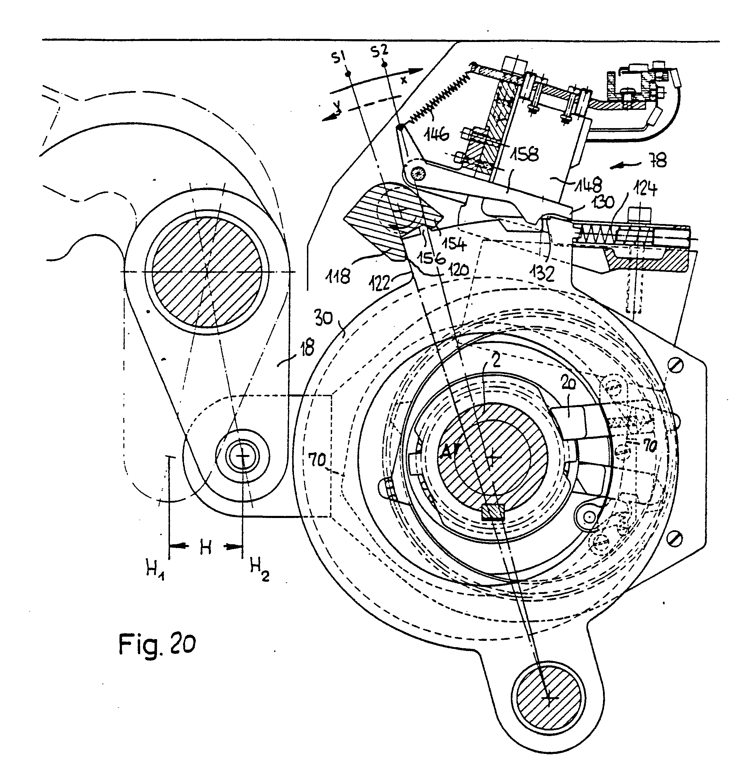

Die Figuren 17 bis 20 zeigen eine abgewandelte Steuervorrichtung, wobei die Teile, welche mit der Steuervorrichtung der Figuren 1 sowie 14 bis 16 identisch sind, mit gleichen Bezugszeichen versehen sind. Im Gegensatz zur Steuervorrichtung der Figuren 1 sowie 14 bis 16 weist die abgewandelte Steuervorrichtung der Figure 17 bis 20 eine Klinke 158 auf, die über einen Bolzen 160 ortsfest am Maschinengestell 114 drehbar gelagert ist. Diese Klinke 158 ist mittels der Feder 146 gegen den Schaltring 30 vorgespannt und wirkt direkt, d. h. ohne einen Zwischenhebel mit dem Steuerteil 148 zusammen. Da die Klinke 158 lediglich eine Schwenkbewegung ausführt und keine Bewegung in Richtung des Schaltweges des Schaltringes 30 muss der Schwenkhebel 118 einen grösseren Schwenkweg ausführen als im oben genannten Beispiel, um den Schaltring 30 zwischen den Schaltstellung $S_1$ und $S_2$ hin- und herzubewegen und die Klinke 158 am Steuerteil 148 zur Anlage zu bringen, wie dies aus den Figuren 17 bis 20 hervorgeht. Die im obigen Ausführungsbeispiel enthaltene mittlere Schaltstellung $S_M$ ist bei diesem Ausführungsbeispiel nicht vorhanden. Im übrigen entspricht jedoch auch diese Steuervorrichtung in funktioneller Hinsicht der obigen Steuervorrichtung.

Der Vorteil dieser zweiten Ausführungsform der Steuervorrichtung ist insbesondere in einer geringeren Anzahl von Teilen zu sehen, da der im ersten Ausführungsbeispiel vorhandene Zwischenhebel 142 entfällt. Ausserdem muss der Schaltring 30 keine Schwenkbewegung ausführen, wenn er in der zweiten Schaltstellung $S_2$ gehalten werden soll, d. h. wenn der Steuerteil 148 nicht aktiviert ist.

**Patentansprüche**

1. Kupplungsvorrichtung, insbesondere für eine Textilmaschine, beispielsweise einer Schaftmaschine, mit einem Pleuel (14), das über einen Exzenterring (10) auf einer vorzugsweise intermittierend drehenden Antriebswelle (2) gelagert ist, wobei ein im Exzenterring (10) mindestens annähernd radial geführt, mittels eines Schaltringes (30) betätigbarer Kupplungskeil (20) wechselweise in mindestens eine mit der Antriebswele (2) verbundene Kupplungsausnehmung (22) oder in mindestens eine mit dem Pleuel (14) verbundene Kupplungsausnehmung (24) einrastbar ist und zwischen den Ausnehmungen (22, 24) mittels Leitkurven (26, 28) gegen Ausrasten gesichert ist, wobei der Schaltring (30) exzentrisch zur Antriebswelle (2) gelagert, mittels einer Feder (124) in eine erste Schaltstellung $S_1$ vorgespannt und mittels einer Steuervorrichtung (78) in eine zweite Schaltstellung $S_2$ bringbar ist, wobei die Steuervorrichtung (78) einen an einer am Maschinengestell (114) ortsfesten Antriebswelle (116) fest angeordneten Schwenkhebel (118) aufweist, welcher hin und her schwenkbar ist und der mittels einer Antriebsfläche (120) mit dem Schaltring (30) entgegen dessen Federvorspannung zusammenwirkt, dadurch gekennzeichnet, dass der Schwenkhebel (118) mittels seiner Antriebsfläche (120) direkt am Schaltring (30) angreift, wobei ferner eine Klinke (128, 158) vorhanden ist, die entgegen der Federvorspannung des Schaltringes (30) mit einer Raste (132) des Schaltringes (30) und mit einem Steuerteil (48) zusammenwirkt, wobei die Klinke (128, 158) in verrastetem Schaltzustand den Schaltring (30) in die zweite Schaltstelung $S_2$ bringt, bzw. in dieser Hält und in entrastetem Zustand die Rückkehr in die erste Schaltstellung $S_1$ ermöglicht.

2. Kupplungsvorrichtung nach Anspruch 1, dadurch gekennzeichnet, dass die Klinke (158) an einem am Maschinengestell (114) ortsfesten Bolzen (160) drehbar gelagert ist.

3. Kupplungsvorrichtung nach Anspruch 1, dadurch gekennzeichnet, dass die Klinke (128) an einem am Schwenkhebel (118) angeordneten Bolzen (126) drehbar gelagert ist, wobei der Bolzen (126) bezüglich der Achse der Antriebswelle (116) annähernd diametral zur Antriebsfläche (120) liegt.

4. Kupplungsvorrichtung nach Anspruch 1, dadurch gekennzeichnet, dass die Klinke (128, 158) gegen den Schaltring (30) vorgespannt ist.

5. Kupplungsvorrichtung nach Anspruch 1, dadurch gekennzeichnet, dass der Steuerteil (78) relativ zur Klinke (128, 158) einstellbar ist.

6. Kupplungsvorrichtung nach Anspruch 1, dadurch gekennzeichnet, dass sie einen mechanisch- oder fluidbetätigten Steuerteil aufweist.

7. Kupplungsvorrichtung nach Anspruch 1, dadurch gekennzeichnet, dass der Steuerteil (78) elektromagnetisch ausgebildet ist und direkt oder über ein Zwischenglied (142) mit der Klinke (128, 158) zusammenwirkt.

8. Kupplungsvorrichtung nach Anspruch 7, dadurch gekennzeichnet, dass die Haltekraft des elektromagnetischen Steuerteiles (78) grösser ist als die Federvorspannung der Klinke (128, 158) gegen den Schaltring (30), wobei die Federvorspannung jedoch grösser ist als die Anzugskraft des elektromagnetischen Steuerteiles (78), wenn die Klinke (128, 158) am Schaltring (30) anliegt.

9. Kupplungsvorrichtung nach Anspruch 1, dadurch gekennzeichnet, dass der Schaltring (30) eine von der Raste (132) weg und gegen einen elektromagnetischen Steuerteil (78) weisende Auflauffläche (134) aufweist, auf die eine Auflauffläche (136) der Klinke (128, 158) aufläuft, wenn sich die Klinke (128, 158) und der Schaltring (30) entgegengesetzt der Verrastung relativ zueinander bewegen.

10. Kupplungsvorrichtung nach Anspruch 1, dadurch gekennzeichnet, dass mit dem Schwenkhebel (118) ein in Schaltstellung $S_2$ weisender Sperrnocken (154) verbunden ist, der, wenn sich Schaltring (30) und Schwenkhebel (118) in erster Schaltstellung $S_1$ befinder, mit einem in Schaltstellung $S_1$ weisenden Ansatz (156) des Schaltringes (30) zusammenwirkt.

11. Kupplungsvorrichtung nach Anspruch 1, dadurch gekennzeichnet, dass der Kupplungskeil (20) mittels einer zwischen Kupplungskeil (20) und Exzenterring (10) angeordneten Feder (62) gegen die Antriebswelle (2) vorgespannt ist und einen Mitnehmernocken (68) aufweist, der mit einer Steuerkurve (70, 74) des Schaltringes (30) entgegen der Vorspannkraft der Feder (62) zusammenwirkt.

12. Kupplungsvorrichtung nach Anspruch 11, dadurch gekennzeichnet, dass im Exzenterring (10) ein vom Kupplungskeil (20) unabhängiger, mindestens annähernd radial verschiebarer selbstschaltender Rückhaltekeil (32) angeordnet ist, der entgegen der Antriebvsrichtung (A) wirksam ist und der wechselweise im mindestens eine mit der Antriebswelle (2) zusammenwirkende Rückhalteausnehmung (34) oder in mindestens eine mit dem Pleuel (14) zusammenwirkende Rückhalteausnehmung (36) einrastet, wobei der Rückhaltekeil (32) und/oder die Ausnehmungen (34, 36) Steuerflächen (38, 40, 42, 44) aufweisen, die ein Verdrängen des Rückhaltekeils (32) aus einer Ausnehmung (34, 36) ermöglichen, wenn die Antriebswelle (2) den Exzenterring (10) bzw. der Exzenterring (10) den Pleuel (14) überholt und wenn das jeweils andere Ende des Rückhaltekeils (32) einer Ausnehmung (36, 34) gegenüber steht.

## Claims

1. A coupling device, more especially for a textile machine, for example a heald machine, having a connecting rod (14) which is mounted by way of an eccentric ring (10) on a preferably intermittently rotating driving shaft (2), wherein a coupling wedge (20), which is guided at least approximately radially in the eccentric ring (10) and which is actuable by means of a switching ring (30), is engageable alternately into at least one coupling recess (22) connected to the driving shaft (2) or into at least one coupling recess (24) connected to the connecting rod (14), and, between the recesses (22, 24), is protected by means of lead cams (26, 28) against disengagement, in which the switching ring (30) is mounted eccentrically to the driving shaft (2), is biassed by means of a spring (124) into a first switching position $S_1$ and can be brought, by means of a control device (78), into a second switching position $S_2$, and in which the control device (78) has a rocking lever (118) which is securely arranged on a driving shaft (116) fixed on the machine frame (114) and which can be swung to and fro and which co-operates by means of a driving surface (120) with the switching ring (30) contrary to the spring bias thereof, characterised in that the rocking lever (118) acts, by means of its driving surface (120), directly on the switching ring (30), in which furthermore a pawl (128, 158) is present which cooperates, contrary to the spring bias of the switching ring (30), with a catch (132) of the switching ring (30) and with a control part (148), the pawl (128, 158), in the engaged switching state, bringing the switching ring (30) into the second switching position $S_2$, or holding it therein, and, in the disengaged state, making possible return into the first switching position $S_1$.

2. A coupling device according to claim 1, characterised in that the pawl (158) is mounted rotatably on a bolt (160) which is fixed on the machine frame (114).

3. A coupling device according to claim 1, characterised in that the pawl (128) is mounted rotatably on a bolt (126) which is arranged on the rocking lever (118), the bolt (126) lying, with respect to the axis of the driving shaft (116), approximately diametrically to the driving surface (120).

4. A coupling device according to claim 1, characterised in that pawl (128, 158) is biassed towards the switching ring (30).

5. A coupling device according to claim 1, characterised in that the control part (78) is adjustable relative to the pawl (128, 158).

6. A coupling device according to claim 1, characterised in that it has a mechanically- or fluid-actuated control part.

7. A coupling device according to claim 1, characterised in that the control part (78) is electromagnetic in design and co-operates directly or by way of an intermediate member (142) with the pawl (128, 158).

8. A coupling device according to claim 7, characterised in that the retaining force of the electromagnetic control part (78) is greater than the spring bias of the pawl (128, 158) towards the switching ring (30), the spring bias being, however, greater than the attractive power of the electromagnetic control part (78) when the pawl (128, 128) butts against the switching ring (30).

9. A coupling device according to claim 1, characterised in that the switching ring (30) has a run-up surface (134) which points away from the catch (132) and towards an electromagnetic control par (78) and onto which a run-up surface (136) of the pawl (128, 159) runs up when the pawl (128, 158) and ther switching ring (30) move, contrary to engagement, relative to one another.

10. A coupling device according to claim 1, characterised in that connected to the swivelling lever (118) is a blocking cam (154) which points in the switching position $S_2$ and which, when the switching ring (30) and the swivelling lever (118) are disposed in the first switching position $S_1$, co-operates with an adjoint-piece (156), pointing in the switching position $S_1$, of the switching ring (30).

11. A coupling device according to claim 1, characterised in that the coupling wedge (20) is biased, by means of a spring (62) arranged between the coupling wedge (20) and the eccentric ring (10), towards the driving shaft (2) and has an entrainment dog (68) which co-operates with a control cam (70, 74) of the switching ring (30) contrary to the biassing force of the spring (62).

12. A coupling device according to claim 11, characterised in that arranged in the eccentric ring (10) is a self-switching restraining wedge (32) which is independent of the coupling wedge (20) and which is displaceable at least approximately radially, and which is effective contrary to the driving direction (A) and which engages alternately into at least one restraining recess (34) co-operating with the driving shaft (2) or into at least one restraining recess (36) co-operating with the connecting rod (14), and in which the hold-back wedge (32) and/or the recesses (34, 36) have control surfaces (38, 40, 42, 44) which make possible displacement of the hold-back wedge (32) out of one recess (34, 36) when the driving shaft (2) overtakes the eccentric ring (10) or alternatively the eccentric ring (10) overtakes the connecting rod (14) when the other end of the holdback wedge (32) stands opposite a recess (36, 34).

## Revendications

1. Dispositif d'accouplement, en particulier pour une machine textile, par exemple, une machine à lames, comportant une bielle (14) qui est montée sur un arbre d'entraînement (2) tournant de préférence par intermittence, dans lequel une clavette d'accouplement (20) guidée dans la bague excentrique (10) de façon au moins sensiblement radiale et apte à être actionnée au moyen d'une bague de commande (30) peut être alternativement encliquetée dans au moins une encoche d'accouplement (22) reliée à l'arbre d'entraînement (2) ou dans au moins une encoche d'accouplement (24) reliée à la bielle (14) et est empêchée de se décliqueter entre les encoches (22, 24) au moyen de cames (26, 28), la bague de commande (30) étant montée de façon excentrique par rapport à l'arbre d'entraînement (2), précontrainte dans une première position de commande $S_1$ au moyen d'un ressort (124) et apte à être amenée dans une seconde position de commande $S_2$ au moyen d'un dispositif de commande (78), le dispositif de commande (78) comportant un levier pivotant (118) monté de manière fixe sur un arbre d'entraînement (116) fixe sur le bâti de machine (114), apte à pivoter dans un sens et dans l'autre et coopérant avec la bague de commande (30) au moyen d'une surface d'entraînement (120) à l'encontre de la précontrainte élastique de celle-ci, caractérisé en ce que le levier pivotant (118) attaque directement la bague de commande (30) au moyen de sa surface d'entraînement (120), un cliquet (128, 158) étant en outre prévu pour coopérer, à l'encontre de la précontrainte élastique de la bague de commande (30) avec un cran d'arrêt (132 de la bague de commande (30) et avec un organe de commande (148), le cliquet (128, 158) amenant, lorsqu'il est dans un état d'encliquetage, la bague de commande (30) dans la seconde position de commande $S_2$ ou la maintenant dans celle-ci, et permettant, dans un état de décliquetage, le retour dans la première position de commande $S_1$.

2. Dispositif d'accouplement selon la revendication 1, caractérisé en ce que le cliquet (158) est monté à rotation sur un axe (160) fixe sur le bâti de machine (114).

3. Dispositif d'accouplement selon la revendication 1, caractérisé en ce que le cliquet (128) est monté à rotation sur un axe (126) disposé sur le levier pivotant (118), à l'axe (126) s'étendant de façon sensiblement diamétrale à la surface d'entraînement (120) par rapport à l'axe de l'arbre d'entraînement (116).

4. Dispositif d'accouplement selon la revendication 1, caractérisé en ce que le cliquet (128, 158) est précontraint en appui contre la bague de commande (30).

5. Dispositif d'accouplement selon la revendication 1, caractérisé en ce que l'organe de commande (78) est ajustable par rapport au cliquet (128, 158).

6. Dispositif d'accouplement selon la revendication 1, caractérisé en ce qu'il comporte un organe de commande actionné mécaniquement ou par un fluide.

7. Dispositif d'accouplement selon la revendication 1, caractérisé en ce que l'organe de commande (78) est réalisé sous une forme électromagnétique et coopère directement ou par l'intermédiaire d'un organe intermédiaire (142) avec le cliquet (128, 158).

8. Dispositif d'accouplement selon la revendication 7, caractérisé en ce que la force de retenue de l'organe de commande électromagnétique (78) est supérieure à la précontrainte élastique du cliquet (128, 158) contre la bague de commande (30), la précontrainte élastique étant toutefois supérieure à la force de rappel de l'organe de commande électromagnétique (78) lorsque le cliquet (128, 158) est en appui sur la bague de commande (30).

9. Dispositif d'accouplement selon la revendication 1, caractérisé en ce que la bague de commande (30) comporte une surface d'abordage (134) s'ouvrant à l'opposé du cran d'arrêt (132) et en direction d'un organe de commande électromagnétique (78), surface sur laquelle aborde une surface d'abordage (136) du cliquet (128, 158) lorsque le cliquet (128, 158) et la bague de commande (30) se déplacent l'un par rapport à l'autre dans le sens contraire à celui de l'encliquetage.

10. Dispositif d'accouplement selon la revendication 1, caractérisé en ce qu'un ergot d'arrêt (154) tourné vers la position de commande $S_2$ est relié au levier pivotant (118), ergot qui, lorsque la bague de commande (30) et le levier pivotant (118) se trouvent dans une première position de commande $S_1$, coopère avec une saillie (156) de la bague de commande (30) tournée vers la position de commande $S_1$.

11. Dispositif d'accouplement selon la revendication 1, caractérisé en ce que la clavette d'accouplement (20) est précontrainte en appui contre l'arbre d'entraînement (2) au moyen d'un ressort (62) disposé entre la clavette d'accouplement (20) et la bague excentrique (10), et comporte un ergot d'entraînement (68) qui coopère avec une came de commande (70, 74) de la bague de commande (30) à l'encontre de la force de précontrainte du ressort (62).

12. Dispositif d'accouplement selon la revendication 1, caractérisé en ce que dans la bague excentrique (10) est disposée une clavette de retenue (32) auto-encliquetable indépendante de la clavette d'accouplement (20) et apte à coulisser au moins sensiblement radialement, ladite clavette (32) agissant dans le sens contraire du sens d'entraînement (A) et s'encliquetant alternativement dans au moins une encoche de retenue (34) coopérant avec l'arbre d'entraînement (2) ou dans au moins une encoche de retenue (36) coopérant avec la bielle (14), la clavette de retenue (32) et/ou les encoches (34, 36) comportant des surfaces de commande (38, 40, 42, 44) qui permettent de repousser la clavette de retenue (32) hors d'une encoche (34, 36) lorsque l'arbre d'entraînement (2) dépasse la bague excentrique (10) ou lorsque la bague excentrique (10) dépasse la bielle (14) et lorsque chaque extrémité de la clavette de retenue (32) fait alternativement vis-à-vis à une encoche (36, 34).

Fig. 1

Fig. 2

132  136          156

S

122

30

72

74

70

70

**Fig.3**

20

66

**Fig. 5**

52  50

98

92

20          56          32

α

60          58  54      94          38

10          64                      42

B₁          34

22          B₂          28

**Fig. 4**

Fig. 6

Fig. 7

Fig. 8

Fig. 9

4

Fig. 10

Fig. 11

Fig. 12

Fig. 13

Fig.14

Fig.15

Fig. 16

Fig. 17

Fig. 18

Fig. 19

Fig. 20